# EUROPEAN PATENT APPLICATION

(11) **EP 2 854 083 A1**
(43) Date of publication of application: **01.04.2015**
(21) Application number: 14185934.8
(22) Date of filing: 23.09.2014
(51) Int. Cl.: G06Q 10/06

(54) **Interoperability between computer systems for quality management**

(30) Priority: 25.09.2013 US 201314036716
(71) Applicant: Sparta Systems, Inc., Hamilton, NJ 08691 (US)
(72) Inventor: Fainor, Judith A., Doylestown, PA 18901 (US); Laresch, Dina, Princeton Junction, NJ 08550 (US); Hartmann, David J., Glen Rock, NJ 07452 (US)
(74) Representative: Finnegan Europe LLP

(57) **Abstract**

Systems, methods, and computer-readable media are described for enabling interoperability between different quality management computer systems used by a manufacturer and its suppliers. An example method comprises receiving, over an electronic network, a first communication from a manufacturer associated with a process. The process is associated with the manufacturer and a supplier. In response to the first communication, a standard workflow is advanced to a new step associated with that standard workflow. If the first party uses a custom workflow, an equivalent step on the custom workflow that corresponds to the new step on the standard workflow is determined. A second communication is sent to the first party, comprising information associated with the advancing of the workflow and at least one of the new step on the standard workflow or the equivalent step on the custom workflow.

## Description

### Field

The present disclosure generally relates to computer systems for tracking quality issues associated with a process, such as a manufacturing process. Particular examples relate to methods and systems for enabling interoperability between different quality management computer systems used by a manufacturer and its suppliers. Embodiments of the present disclosure include methods, systems, and computer-readable media storing instructions for bi-directional quality management systems.

### Background

Enterprise Quality Management Systems (EQMS) are a type of software usable for tracking quality issues in a variety of situations. One particular use case for such systems is in medical device manufacturing. A medical device producer can use an on-premises EQMS to keep track of the manufacture of a particular medical device. Each step of a process of creating that device may be accompanied by the storage or manipulation of data in the EQMS. This enables auditing, record-keeping, compliance with Federal requirements, storage of relevant documents or data, and the like.

Each EQMS may have its own particular workflow for problem resolution. These workflows include a set of states and activities for issue resolution. For example, if a manufacturer notices that a lot of goods received from a supplier are not in line with the manufacturer's specification, the manufacturer can create an issue resolution request in the EQMS and notify the supplier. This advances the workflow to a "waiting for acknowledgement" state. When the supplier acknowledges receipt of the issue, the EQMS can be advanced from the "waiting for acknowledgement state" to the "issue resolution in progress" state. Thus, EQMSs enable manufacturers to keep track of the status of a particular issue resolution process. However, the workflow used in a particular EQMS may be incompatible with a custom workflow used by a particular manufacturer. The workflow states in a particular EQMS thus may be of little use to the manufacturer.

Separate systems are used to manage the quality of a manufacturer's suppliers. For example, a supplier may want to inform the manufacturer about a potential defect or problem with an item provided to the manufacturer. This may include sending the manufacturer a document, images, test results, a proposed action plan, or other data. The manufacturer may receive the information about the defect or problem from a variety of different sources - such as email, faxes, or telephone calls - and store the information in the appropriate supplier system. These supplier systems also enable the manufacturer to keep track of issue resolution using a different workflow, but at the expense of reconciling information between the EQMS systems and the supplier systems. Properly tracking issue resolution requires manual exchange of information between EQMS systems and supplier systems. This is time-consuming, cumbersome, and hinders audit processes.

Embodiments of the present disclosure solve these problems as well as others.

### SUMMARY OF THE DISCLOSED EMBODIMENTS

In accordance with the disclosed embodiments, an example method for quality management is provided. The method comprises receiving, over an electronic network, a first communication from a first party associated with a process. The process is associated with the first party and a second party. (In some embodiments the first party may be a manufacturer and the second party may be a supplier that supplies the manufacturer with goods, materials, or services.) The method further comprises advancing a standard workflow to a new step associated with that standard workflow, in response to receiving the first communication. The method further comprises determining whether the first party uses a custom workflow, and if so, determining an equivalent step on the custom workflow that corresponds to the new step on the standard workflow. The method further comprises sending a second communication to the first party, comprising information associated with the step of advancing and at least one of the new step on the standard workflow or the equivalent step on the custom workflow. The method preferably uses at least one computer system, and the standard workflow is preferably associated with the at least one computer system.

Also provided is an example computer system. The computer system comprises at least one electronic processor and memory. The memory stores instructions that, when executed by the at least one electronic processor, cause the at least one electronic processor to perform the above example method.

Also provided is a computer system for quality management, comprising at least one electronic processor and a memory storing instructions that, when executed by the at least one electronic processor, cause the at least one electronic processor to perform a method comprising: receiving a first communication from a first party associated with a process, the process associated with the first party and a second party; in response to receiving the first communication, advancing a standard workflow to a step associated with the standard workflow; determining whether the first party uses a custom workflow, and if so, determining an equivalent step associated with the custom workflow based on the step associated with the standard workflow; sending a second communication to the first party comprising information associated with the advancing and at least one of the step or the determined equivalent step.

The instructions can be further configured to cause the at least one electronic processor to send a third communication to the second party, the third communication comprising information associated with the first communication and the step associated with the standard workflow. The instructions can be further configured to cause the at least one electronic processor to: receive a fourth communication from the second entity; in response to receiving the fourth communication, advance the standard workflow to a second step associated with the standard workflow; if the first party uses the custom workflow, determine a second equivalent step associated with the custom workflow based on the second step associated with the standard workflow; and send a fifth communication to the first party, the fifth communication comprising information associated with the fourth communication and at least one of the second step or the second equivalent step. At least one of the first communication, the second communication, the third communication, or the fourth communication may include at least one of a document, an image, a recording, or data associated with at least one step of the process. The second party can be a supplier to the first party, and the process associated with the supplier and the first party is a manufacturing process. The first communication can be a request for an update, and the fourth communication can include information associated with the request for an update. The first communication can include information on one of a quality issue or an audit questionnaire; and the fourth communication comprises at least one of a corrective action plan or a response to the audit questionnaire. Determining whether the first party uses the custom workflow may further comprise: determining a set of states and activities associated with the custom workflow; determining whether the states and activities associated with the custom workflow correspond to states and activities associated with the standard workflow; and if the states and activities associated with the custom workflow correspond to states and activities associated with the standard workflow, determining that the first party uses the custom workflow. The system can determine that the first party uses the standard workflow if the states and activities associated with the custom workflow do not correspond to states and activities associated with the standard workflow.

Also provided is an apparatus comprising means for performing a method as herein described. For example, the method may comprise: means for receiving a first communication from a first party associated with a process, the process associated with the first party and a second party; means for advancing a standard workflow to a step associated with the standard workflow in response to receiving the first communication; means for determining whether the first party uses a custom workflow, and if so, determining an equivalent step associated with the custom workflow based on the step associated with the standard workflow; and means for sending a second communication to the first party comprising information associated with the advancing and at least one of the step or the determined equivalent step.

Also provided is an example non-transitory computer-readable storage medium. The storage medium comprises instructions that, when executed by at least one electronic processor, cause the at least one electronic processor to perform the above example method.

Also provided is a non-transitory computer-readable storage medium comprising instructions, the instructions configured to cause at least one electronic processor perform a method comprising: receiving a first communication from a first party associated with a process, the process associated with the first party and a second party; in response to receiving the first communication, advancing a standard workflow to a step associated with the standard workflow; determining whether the first party uses a custom workflow, and if so, determining an equivalent step associated with the custom workflow based on the step associated with the standard workflow; sending a second communication to the first party comprising information associated with the advancing and at least one of the step or the determined equivalent step. Determining whether the first party uses the custom workflow may further comprise: determining a set of states and activities associated with the custom workflow; determining whether the states and activities associated with the custom workflow correspond to states and activities associated with the standard workflow; and if the states and activities associated with the custom workflow correspond to states and activities associated with the standard workflow, determining that the first party uses the custom workflow.

It is to be understood that both the foregoing general description and the following detailed description are exemplary and explanatory only and are not restrictive of the claims.

The accompanying drawings, which are incorporated in and constitute a part of this specification, illustrate several features and together with the description, serve to explain the principles and variations of the disclosed embodiments.

### BRIEF DESCRIPTION OF THE DRAWINGS

FIG. 1 illustrates typical communication paths between manufacturers and third parties in embodiments of the prior art.
FIG. 2 illustrates a diagram of connected systems in accordance with disclosed embodiments.
FIG. 3A illustrates an example standard workflow, in accordance with disclosed embodiments
FIG. 3B illustrates an example mapping of states and activities from a standard workflow to states and activities of a customer workflow, in accordance with disclosed embodiments.
FIG. 4 illustrates an example process for advancing steps in a workflow, in accordance with disclosed embodiments.
FIG. 5A illustrates an example supplier quality issue and resolution workflow, in accordance with disclosed embodiments.
FIG. 5B illustrates an example supplier audit questionnaire workflow, in accordance with disclosed embodiments.
FIG. 5C illustrates an example notification of quality issue and resolution workflow, in accordance with disclosed embodiments.
FIG. 5D illustrates an example supplier change notification workflow, in accordance with disclosed embodiments.
FIG. 6 illustrates an example computer system for implementing various systems in this disclosure.

### DESCRIPTION OF THE EMBODIMENTS

Wherever possible, the same reference numbers will be used throughout the drawings to refer to the same or like parts.

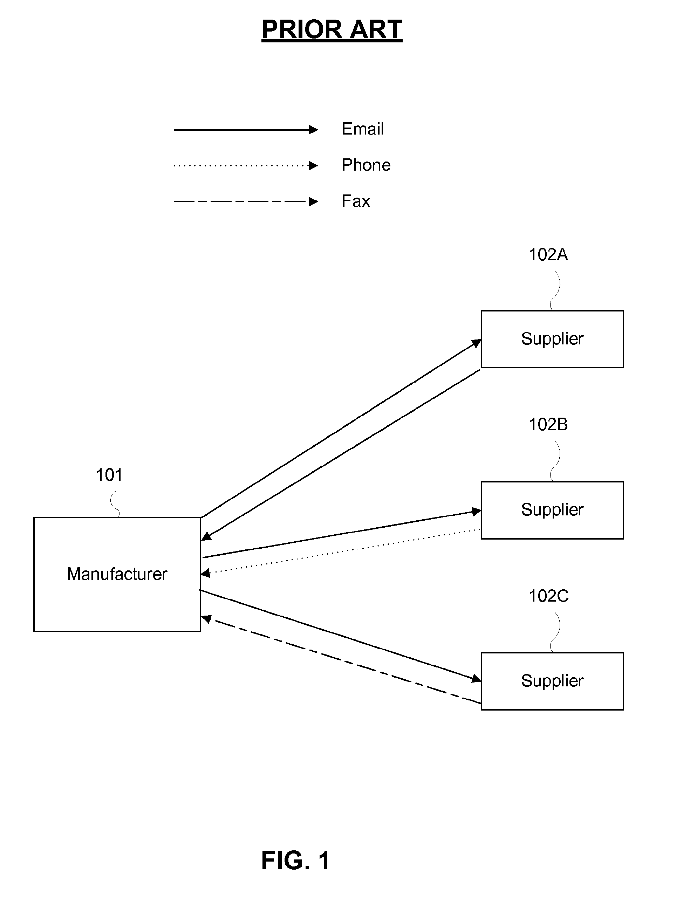

FIG. 1 is a diagram 100 illustrating typical communication paths between manufacturers and third parties in embodiments of the prior art. Manufacturer 101 is a device manufacturer that communicates with three suppliers 102A-102C. Manufacturer 101, in this example, prefers to communicate via email with its suppliers. In this example, manufacturer 101 manufactures a syringe using parts supplier by suppliers 102A-102C. Supplier 102A provides plungers, supplier 102B provides needles, and supplier 102C provides syringe bodies. When manufacturer 101 determines that a quality issue exists with one of these parts, manufacturer 101 drafts and sends an email to the supplier responsible for the part at issue.

For example, if manufacturer 101 notices a defect with a box of plungers, manufacturer 101 sends an email to supplier 102A concerning the issue, and supplier 102A responds to the issue with a second email. However, if manufacturer 101 notices a defect with the needle, supplier 102B may respond via phone. Similarly, if manufacturer 101 notices a defect with the body, supplier 102C will respond via fax. Manufacturer 101 thus has to keep track of each communication from its suppliers over three separate modes of communication. This is time-consuming, cumbersome, and can cause problems later. For example, if the Food and Drug Administration (FDA) finds fault with the syringe, manufacturer 101 could find it difficult to prove that it took steps to mitigate particular defects, because the communications from suppliers is not received in the same form. Further, if supplier 102B needs to respond to manufacturer 101 by sending a document, image, test data, or the like, supplier 102B would need to use another method to communicate with manufacturer 101 because supplier 102B cannot transmit these items in a phone call.

Worse still, when manufacturer 101 receives data from suppliers 102A-102C, the data must be manually entered into a single quality management system. This requires an operator to manually type in data received over fax, email or the phone. This can introduce other errors because the operator may enter incorrect information, may misread information from an email or fax, may not know all details discussed during a particular phone call, or the like.

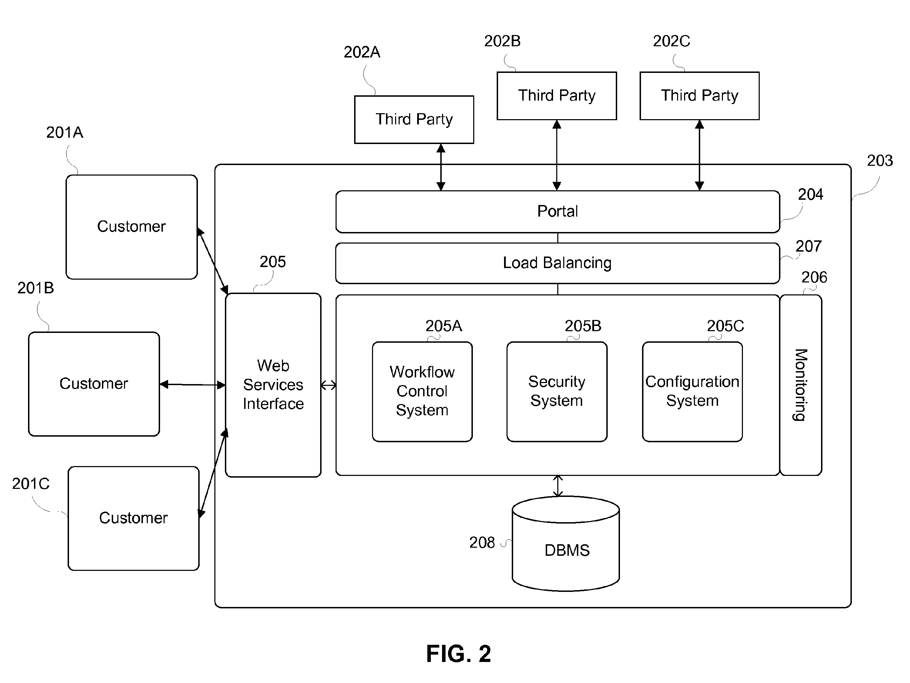

FIG. 2 illustrates connections between customers 201A-201C, a cloud system 203, and third parties 202A-202C.

Each of customers 201A-201C represents a particular entity that interacts with third parties 202A-202C through cloud system 203. Each of 201A-201C may communicate with other devices in FIG. 2 using one or more electronic devices such as a personal computer, server, mobile device, or the like. In some embodiments, customers 201A-201C represent manufacturers that receive materials, supplies, designs, services, or the like, from one or more of third parties 202A-202C. Customers 201A-201C are referred to as "customers" of cloud system 203, in that customers 201A-201C are engaged with cloud system 203 for services provided by cloud system 203. For example, each of customers 201A-201C may be associated with a respective user account on cloud system 203 and may authenticate to cloud system 203 using that account.

Customers 201A-201C, in some embodiments, also have software or hardware that enables them to communicate with cloud system 203. For example, customers 201A-201C may operate "on-premises" quality management software. The on-premises software enables customers 201A-201C to communicate with cloud system 203.

In one illustrative example, customer 201 A is a manufacturer that manufactures a syringe. Customer 201 A receives plungers from third party 202A, needles from third party 202B, and syringe bodies from third party 202C. Once received, customer 201 A determines whether the parts received from third parties 202A-202C are in compliance with pre-defined specifications. For example, customer 201 A may test the plungers for flexibility and elasticity, test the needles for strength and diameter, and test the bodies for size and reliability. After determining that received parts are in compliance with pre-defined specifications, customer 201 A can then assemble the syringes using the received parts. However, for example, if customer 201 A determines that the needles received from third party 202B are too wide or break too easily, customer 201 A may notify third party 202B of this issue using cloud device 203.

It should be understood that the disclosure is not limited to embodiments involving medical equipment. For example, if customer 201 A is a table manufacturer, third parties 202A-202C may provide materials such as wood, screws or bolts, wheels, paint, designs, or any other material usable by customer 201 A to create a table. As another example, customers 201A-201C may receive services (instead of parts) from third parties 202A-202C.

Each of third parties 202A-202C represents a particular entity that interacts with customers 201A-201C through cloud system 203. Each of third parties 202A-202C may communicate with other devices in FIG. 2 using one or more electronic devices such as a personal computer, server, mobile device, or the like. In some embodiments, third parties 202A-202C represent suppliers that provide materials, goods, designs, services, or the like, to customers 201A-201C. Third parties 202A-202C communicate with customers 201A-201C by communicating with cloud device 203.

Cloud device 203 represents a system in communication with customers 201A-201C and third parties 202A-202C. Cloud device 203 may be implemented as one or more electronic devices, such as a personal computer, server, or other electronic device. Similarly, the components illustrated as part of cloud device 203 may be implemented as hardware, software, firmware, or a combination thereof.

Portal 204 enables communication between cloud device 203 and third parties 202A-202C. In some embodiments, portal 204 may be implemented as software, a web site, a web application, or the like. Portal 204 enables third parties 202A-202C to receive information from cloud device 203 (such as issue notifications received from customers 201A-201C) and send information back to cloud device 203 (such as a corrective action plan in response to an issue notification).

In some embodiments, portal 204 and third parties 202A-202C may communicate using Representational State Transfer services (also known as "RESTful services"). RESTful services are services implemented using a client/server relationship. A client sends a request to a server and the server processes the request and responds to the client. RESTful communications between a client and a server are typically stateless, in that they do not require the server to store information between separate requests from the client. Each communication from the client contains all information necessary for the server to process the request. Each communication from third parties 202A-202C to portal 204 contains a "request" with all information necessary for portal 204 to process the request, and portal 204 responds to the request appropriately.

Web services interface 205 enables communication between cloud device 203 and customers 201A-201C. In some embodiments, web services interface 205 may be implemented as software, a web site, a web application, or the like. For example, customer 201 A may utilize on-premises software (e.g., software on a computer operated by customer 201 A) to communicate with web services interface 205 and further may utilize a user account to authenticate itself to cloud device 205.

In some embodiments, web services interface 205 and customer 201A-201C may communicate using Web Services. Web services are software systems that enable communication over a network. Typical web services enable communication between a server and a client. The server has an interface that informs the client how to interact with the server. A client sends a request to a server and the server processes the request and responds to the client.

While portal 204 and web services interface 205 are depicted as part of cloud device 203, portal 204 or web services interface 205 may be implemented as separate devices or systems that communicate with cloud device 203.

Workflow control system 205A is configured to maintain a quality management workflow for each issue resolution request initiated by one of customers 201A-201C or third parties 202A-202C. For example, cloud system 203 receives an issue resolution request from customer 201 A, and workflow control system 205A will advance a standard workflow to an "open" state. The open state means that cloud system 203 received the issue resolution request from customer 201 A. Workflow control system 205A then determines that third party 202A should receive the issue resolution request, sends the issue resolution request to third party 202A, and advances the standard workflow to a "pending acknowledgement" state. The pending acknowledgement state means that the third party 202A has yet to acknowledge the issue resolution request.

Workflow module 205A may also maintain a correspondence between a customer workflow and a standard workflow. In some embodiments, workflow module 205A maintains a standard workflow that is used by cloud system 203 to keep track of each issue resolution request initiated by one of customers 201A-201C or third parties 202A-202C. The standard workflow may implement a set of states and activities. A state represents the status of a particular issue resolution process, while activities represent particular actions that are taken in response to each state. Each activity corresponds to one or more states.

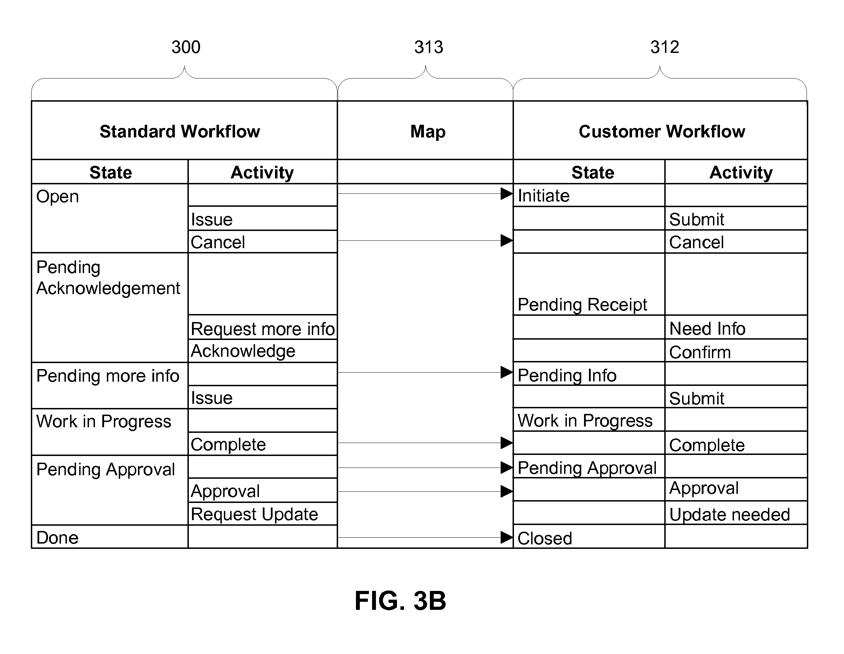

For example, a state of "pending acknowledgement" could represent a status of the issue resolution process immediately after the issue resolution request was sent from cloud system 203 to the third party that needs to take steps to resolve the issue resolution request. One example activity corresponding to the "pending acknowledgement" state includes "request more information," which represents a request from the third party for further information that it deems necessary to resolve the issue resolution request. Another example activity includes "acknowledgement," representing an indication from the third party that it received the issue resolution request. (An example standard workflow is depicted in FIG. 3B as standard workflow 300.)

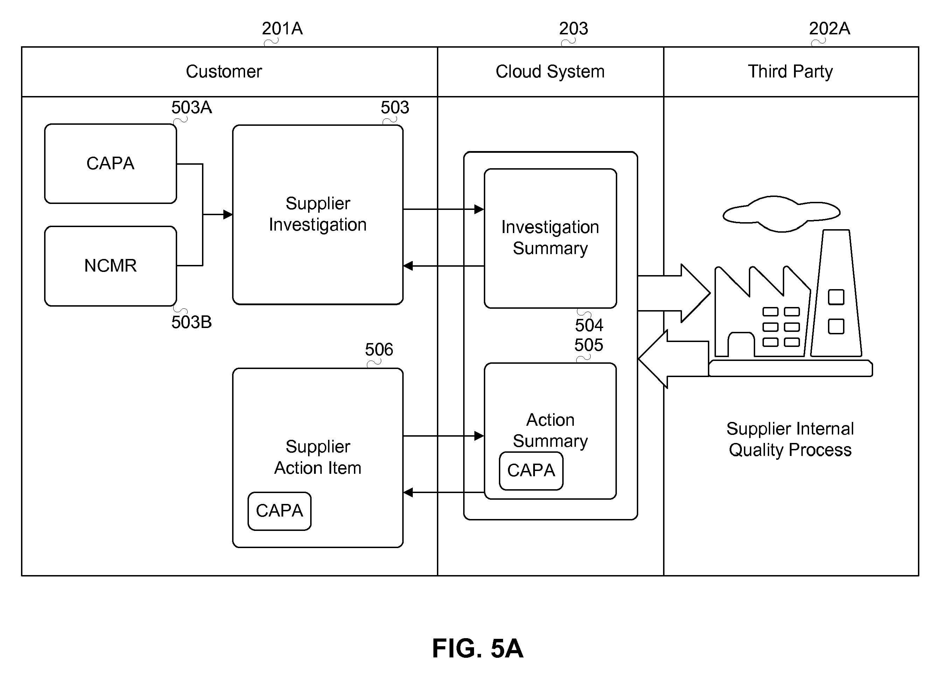

Issue resolution requests comprise a request by a first party (an "initiating party") for information from a second party (a "notified party"). One example request is a supplier quality issue resolution request, indicating that a customer has discovered a quality issue with goods, supplies, or material provided by a supplier. The customer creates the supplier quality issue resolution request for sending to the supplier. The request includes, for example, test data, measurements, documents, photos, pictures, or the like. The supplier receives the request (e.g., through cloud system 203) and takes appropriate action. The appropriate action includes, for example, investigating possible causes of the quality issue, developing a Corrective And Preventative Action (CAPA) plan indicating proposed changes to fix the issue, making changes to a production process to fix the issue, or the like. The supplier may then respond to the request by sending the developed CAPA plan, sending a request for further information, sending a list of steps taken to resolve the quality issue, or the like. One of skill in the art will understand that a variety of issue resolution requests are possible. (Some example issue resolution requests are described below with respect to FIGS. 5A-5D.)

Workflow module 205A may also maintain a customer workflow in addition to the standard workflow explained above. For example, some manufacturers may desire to use a different issue resolution workflow, such as one that requires extra steps. Examples of such extra steps include communication with a third party, the logging of particular data, a delay introduced in reporting, or process auditing. Other manufacturers may desire to use a customer workflow that is similar or identical to the standard workflow, but with different names for each activity and/or state. For example, an activity called "Issue" in a standard workflow could be referred to as "Submit" on a customer workflow. (An example customer workflow is depicted in FIG. 3B as customer workflow 302.)

Workflow module 205A is configured to maintain a correspondence between states and activities on the standard workflow and states and activities on the customer workflow. In some embodiments, workflow module 205A may perform a process to map each state and activity on the standard workflow to a state and activity on the customer workflow. In other embodiments, workflow module 205A may receive data indicating such a map between states and activities.

Security system 205B is configured to maintain security in cloud system 203. Information coming from customers 201A-201C and third parties 202A-202C may relate to confidential, private, and/or sensitive business information, so maintaining security of the information is important. Security system 205B maintains security in cloud system 203 by restricting access to data in DBMS 208 to those parties that are in a particular relationship with one another. For example, if customer 201 A receives materials from third parties 202A and 202B but not from third party 202C, security system 205B enables customer 201 A to see data associated with third parties 202A and 202B, such as identification, history, contact information, audit information, or the like. Security system 205B also enables customer 201 A to view data associated with the relationship between customer 201 A and third parties 202A and 202B, such as past issue resolutions, order history, or the like. However, security system 205B will prevent customer 201 A from viewing data associated with third party 202C. In some embodiments, security system 205B would prevent customer 201 A from determining whether third party 202C interacts with cloud system 203.

Configuration system 205C is configured to enable customization of cloud system 203. For example, configuration system 205C enables users (e.g., customers 201A-201C) to set preferences for interacting with cloud system 203 (e.g., preferences for viewing data or access), to initialize or modify a customer workflow for users, manage licenses for users to use cloud system 203, or the like.

Monitoring module 206 is configured to provide services and/or interfaces for monitoring the activity of cloud system 203. For example, monitoring module 206 enables access to performance data (e.g. memory and processor usage of running applications, availability information), resource consumption (e.g., disk storage), thread profiling for applications running on cloud system 203, alerts generated by applications running on cloud system 203, or the like.

Database Management System (DBMS) 208 is configured as a database for storing information associated with customers 201A-201C, third parties 202A-202C, and cloud system 203. For example, DBMS 208 may be configured to store information on past issue resolution requests and their results, to store audit-related information for each issue resolution request, to maintain maps between steps and activities in a standard workflow and steps and activities in one or more customer workflows, to store contact information for each of customers 201A-201C and third parties 202A-202C, to store user information for customer 201A-201C (such as usernames, credentials, roles, or permissions), or the like.

Load balancing module 207 is configured to balance workload between multiple devices. For example, in some embodiments, workflow control system 205A, security system 205B, configuration system 205C, and DBMS 208 can be implemented as a cluster of devices (e.g., one or more computer systems). Load balancing module 207 can determine the resource consumption and performance data for each device in the cluster of devices, and can balance processing activities between the devices by equally distributing new activities between those devices. This can prevent any one device from doing a relatively high amount of work compared to other devices, which enables faster processing of activities in general.

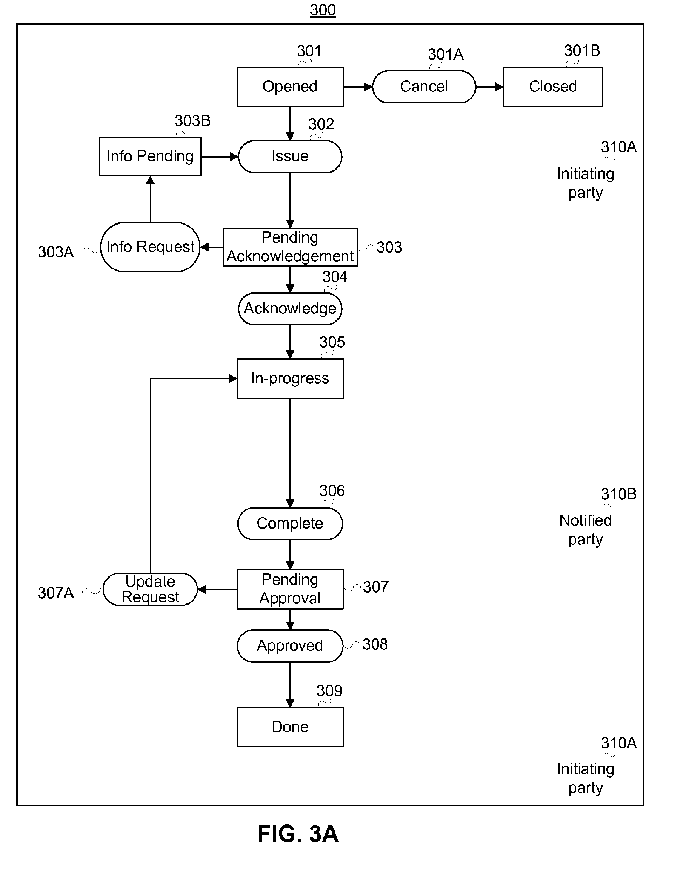

FIG. 3A illustrates an example standard workflow 300 in accordance with disclosed embodiments. Workflow 300 includes a set of example states (represented by rectangular blocks) and activities (represented by ovular blocks) for use with the disclosed embodiments. Each of customers 201A-201C and third parties 202A-202C in FIG. 2 can use workflow 300 in resolving issue notification requests initiated by an initiating party (e.g., one of customers 201A-201C or third parties 202A-202C) that are directed to a notified party (e.g., another of customers 201A-201C or third parties 202A-202C). Cloud system 203 uses workflow 300 as a way of keeping track of the stage that a particular issue resolution request is at.

In some embodiments, a customer, such as customer 201 A, communicates information (such as data, documents, pictures, issue resolution requests, or the like) to a third party, such as third party 202A, by sending the information to cloud system 203. Cloud system 203 determines whether the information from customer 201 A should trigger the advancement of a workflow to a new step. Cloud system 203 then forwards the information to third party 202A and optionally advances the workflow to a new step. In other embodiments, customer 201 A and third party 202A can communicate with one another through other channels (e.g., email, phone, or fax) and can send an indication to cloud system 203 indicating that communication took place. Upon receipt of that indication, cloud system 203 can then advance the workflow to a new step.

Opened state 301 represents a state where initiating party 310A has created an issue resolution request. For example, if customer 201 A notices a quality issue with a particular item supplied by third party 202A, customer 201 A can generate a supplier quality issue resolution request directed to third party 202A. (An example supplier quality issue resolution request is described below with respect to FIG. 5A.) Customer 201 A sends the supplier quality issue resolution request to cloud device 203 for forwarding to third party 202A. Cloud device 203 advances workflow 300 to opened state 301, indicating that an issue corresponding to the supplier quality issue resolution request has been created. Cloud device 203 then forwards the supplier quality issue resolution request to third party 202A.

Cancel activity 301 A represents a request by initiating party 310A to cancel the issue resolution request. For example, if customer 201 A makes a supplier quality issue resolution request but later realizes that the request was in error, customer 201 A sends a message to cloud device 203 requesting that the resolution request be closed. Cloud device 203 advances workflow 300 to cancel activity 301 A. Cloud device 203 then may send a notification to third party 202A indicating that the issue has been closed and that no action needs to be taken by third party 202A.

Closed state 301 B represents a state following cancel activity 301 A. After cloud device 203 receives a message that an issue should be closed (such as in cancel activity 301 A), cloud device 203 may advance workflow 300 to closed state 301 B indicating that the issue has been closed. Cloud device 203 may also record (for example, in a database like DBMS 208 in FIG. 2) that the issue has been closed. This enables, for example, auditing of issue resolution requests.

Issue activity 302 represents a request by initiating party 310A to notify notified party 310B of the presence of the issue resolution request, requesting that notified party 310B take some action. In some embodiments, a communication associated with this request is sent by initiating party 310A to cloud device 203 for forwarding to notified party 310B. For example, if customer 201 A initiates a supplier quality issue resolution request for an item received from third party 202A, customer 201 A may send a communication to cloud device 203, to request that the supplier quality issue resolution request be sent to third party 202A. This communication triggers cloud device 203 to detect info issue activity 302. Cloud device 203 may then advance workflow 300 to pending acknowledgement state 303.

In some embodiments, issue resolution requests may be sent to notified party 310B via email, via an electronic communication, via a web portal (such as portal 204 or web services interface 205 in FIG. 2), via a text message, via a voicemail, or the like.

Pending acknowledgement state 303 represents a state when initiating party 310A has requested cloud device 203 to send the issue resolution request to notified party 310B, and cloud device 203 is waiting for notified party 310B to acknowledge the issue resolution request.

Info request activity 303A represents a request from notified party 310B for further information relating to a received issue resolution request. Notified party 310B may request further information in a variety of situations. For example, if customer 201 A sends a supplier quality issue resolution request to third party 202A indicating a quality issue in goods shipped by third party 202A, third party 202A may request further information from customer 201 A, such as a lot number for the goods with the quality issue, pictures of the quality issue, test data confirming the existence of the quality issue, or the like. Notified party 310B may request this information by sending a communication to cloud device 203 for forwarding to initiating party 310A. This communication triggers cloud device 203 to detect info request activity 303A. Cloud device 203 may then advance workflow 300 to info pending state 303B.

Info pending state 303B represents a state when notified party 310B has sent a communication to initiating party 310A. The communication requests further information relating to an issue resolution request sent by initiating party 310A. Cloud device 203 may advance workflow 300 to info pending state 303B, indicating that notified party 310B is waiting for initiating party 310A to respond. Initiating party 310A may then respond to the request from notified party 310B. For example, initiating party 310A may send a communication with the requested information therein to cloud device 203 for responding to the request from notified party 310B. This triggers issue activity 302, and cloud device 203 may advance workflow 300 to pending acknowledgement state 303.

Acknowledge activity 304 represents a communication from notified party 310B acknowledging the receipt of a communication. For example, notified party 310B receives a communication from initiating party 310A (e.g., through cloud system 203) concerning an issue notification request. For example, notified party 310B may receive a supplier quality issue resolution request from cloud device 203 that was sent by initiating party 310A. Notified party 310B sends a confirmation indicating receipt of the supplier quality issue resolution request (for example, by checking a box on a web page hosted by portal 204, by sending an email to cloud device 203, by responding to a text message sent by cloud device 203, or the like). This confirmation triggers cloud device 203 to detect acknowledge activity 304. Cloud device 203 may then advance workflow 300 to in-progress state 305.

In-progress state 305 represents a situation where notified party 310B is taking steps to respond to the received issue resolution request. For example, if third party 202A receives a supplier quality issue resolution request from customer 201 A indicating that a particular part is larger than customer 201 A requested, third party 202A may take steps to fix that issue. For example, third party 202A may reconfigure its manufacturing process to be more exact, recalibrate machines used to manufacture the goods or materials provided to customer 201 A, determine necessary steps to fix the issue, or the like.

Once notified party 310B considers its work to be complete in fixing the issue indicated in the issue resolution request, notified party 310B may send a message to initiating party 310A. The message includes, for example, information about what steps notified party 310B took to correct the issue. The message may also include a Corrective And Preventative Action (CAPA) plan indicating the steps that notified party 310B plans to take in response to the issue resolution request. In some embodiments, notified party 310B may send this message through cloud device 203 for forwarding to initiating party 310A. This message triggers cloud device 203 to detect complete activity 306.

Complete activity 306 represents the receipt of a communication from notified party 310B that it has resolved an issue resolution request. In response to receiving the communication from notified party 310B while at in-progress state 305, cloud device 203 may advance workflow 300 to pending approval state 307.

Pending approval state 307 represents a state during which initiating party 310A is reviewing the information provided by notified party 310B. For example, if notified party 310B sent a CAPA plan to initiating party 310A, pending approval state 307 represents a period of time while initiating party 310A is reviewing the CAPA plan.

Update request activity 307A represents an activity where initiating party 310A requests an update or change from notified party 310B in response to receiving a communication in complete activity 306. For example, initiating party 310A may determine that plans in a received CAPA plan are insufficient to fix the issues raised by initiating party 310A. Initiating party 310 may also determine that a received CAPA plan does not contain the information necessary to determine whether the CAPA plan will resolve the issue. In these situations, initiating party 310A may send a communication to notified party 310B requesting an updated plan. In some embodiments, initiating party 310A may send this communication through cloud device 203. Cloud device 203 advances workflow to in-progress state 305. Notified party 310B may then respond with another CAPA plan, other information requested by initiating party 310A, or the like.

Approved activity 308 represents a communication from initiating party 310A, indicating that it has determined that the information received from notified party 310B is sufficient to resolve the issue resolution request. As one example, approved activity 308 represents initiating party 310A accepting a CAPA plan proposed by notified party 310B in response to a supplier quality issue resolution request. In some embodiments, this communication may be sent to cloud device 203 for forwarding to notified party 310B. Cloud device 203 may then advance workflow 300 to done state 309.

Done state 309 represents the state during which initiating party 310A has approved the proposed resolution by notified party 310B and the issue may thus be closed. After cloud device 203 receives advances workflow 300 to done state 309, cloud device 203 may also record (for example, in DBMS 208 in FIG. 2) that the issue has been closed and resolved. This enables auditing of issue resolution requests at a later time.

FIG. 3B illustrates an example mapping of states and activities from a standard workflow to states and activities of a customer workflow, in accordance with disclosed embodiments.

Standard workflow 300 includes a set of states and activities. A state represents the status of a particular issue resolution process, initiated by a communication sent by one of a customer (e.g., customer 201 A in FIG. 2) or a third party (e.g., third party 202A in FIG. 2). Activities represent particular actions that correspond to a response to the communication sent by one of a customer or a third party.

Each activity corresponds to one or more states. The activities serve as transitions between states. For example, the "pending approval" state in standard workflow 300 indicates that a third party has proposed a solution to an issue resolution request and that the corresponding customer is considering it. The customer may approve a solution (such as a CAPA plan) received from the third party and send a communication to cloud device 203. Cloud device 203 can receive the communication which triggers the "approval" activity, and advance a workflow 311 to the "done" state.

Customer workflow 312 also includes a set of states and activities. Each customer (such as one of customers 201A-201C) may have its own preferred workflow for initiating and responding to issue notification requests. The states and activities of customer workflow 312 may be similar in some respects to standard workflow 300. However, in some embodiments, customer workflow 312 has states and/or activities that differ from the states and activities in standard workflow 300.

Map 313 represents determinations as to whether states and activities on customer workflow 312 map to corresponding states and activities on standard workflow 300. Cloud system 203 maintains the status of each issue resolution request on standard workflow 300 and informs a customer associated with the issue resolution request of the current status of the issue resolution request (e.g., the state and/or activity representing the current state of the issue resolution request) on standard workflow 300. In some embodiments, cloud system 203 may use map 313 to determine whether the states and activities on customer workflow 312 map to corresponding states and activities on standard workflow 300. If so, cloud system 203 determines that the customer is using customer workflow 312, and informs the customer of the current status using the steps and/or activities on customer workflow 312. However, if cloud system 203 determines that not all states and activities on customer workflow 312 map to corresponding states and activities on standard workflow 300, cloud system 203 determines that the customer is using standard workflow 300, and inform the customer of the current status using the steps and/or activities on standard workflow 300.

In some embodiments, map 313 is generated for each respective customer that has a customer workflow. For example, if customer 201 A uses a custom workflow for its issue resolution requests, customer 201 A may use software (e.g., at a device operated by customer 201 A) to manually create each correspondence between each state and activity on standard workflow 300 and each state and activity on custom workflow 312. Map 313 can be based on a template provided by cloud system 203. Map 313 can also be partially generated (e.g., by cloud system 203) with suggestions for matching each state and activity on the standard workflow to a respective state and activity on the customer workflow. Customer 201 A may then review and customize the generated matches or template to complete map 313.

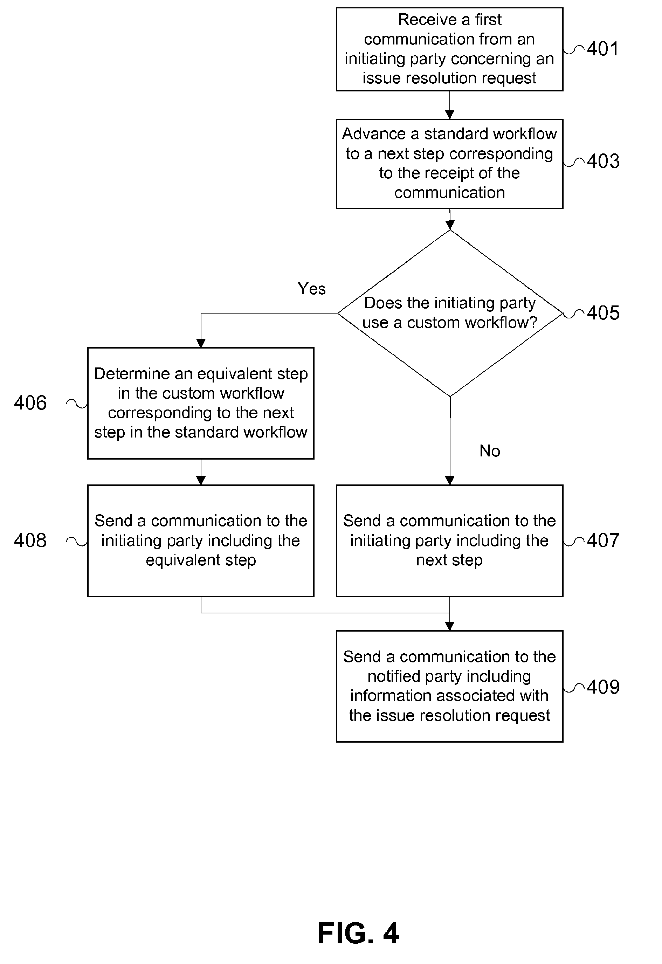

FIG. 4 illustrates an example process for advancing steps in a workflow based on communications received from a customer or a third party. The steps in FIG. 4 are executed at cloud device 203 and enable the parties communicating using cloud device 203 to maintain a consistent workflow regarding particular issue resolution requests, even when a customer maintains a custom workflow that differs from a standard workflow.

In step 401, cloud device 203 receives a first communication from an initiating party concerning an issue resolution request. For example, customer 201 A may determine that goods received from third party 202A are not sufficient for use by customer 201 A. Customer 201 A generates and send a supplier quality issue resolution request indicating that the received goods are not sufficient. The supplier quality issue resolution request includes, for example, test data, photos, documents, a Non-Conforming Material Report (NCMR) comprising information associated with the quality issue, a proposed CAPA plan for adoption by the third party 202A, or any other information that serves to document the issue with the received goods.

In step 403, cloud device 203 advances a standard workflow to a next step. This indicates that the receipt of a communication in step 401 triggered the detection of an activity corresponding to the current state. For example, if the communication received in step 401 corresponds to a request by customer 201 A to issue the supplier quality issue resolution request to third party 202A, cloud device 203 may determine that this communication triggers issue activity 302 (in FIG. 3A). In response to the triggering, cloud device 203 may advance standard workflow 300 to pending acknowledgement state 303 to wait for acknowledgement by notified part 310B.

In step 405, cloud device 203 may determine whether the initiating party uses standard workflow 300 or a custom workflow (such as customer workflow 312 in FIG. 3). Cloud device 203, in some embodiments, may be configured to determine that the initiating party uses a custom workflow if all steps and/or activities in the custom workflow map to equivalent steps or activities in standard workflow 300. For example, cloud device 203 may determine that the initiating party uses a customer workflow by consulting a map such as map 313 in FIG. 3B. In some embodiments, cloud device 203 may only determine that an initiating party uses a custom workflow if each step on the custom workflow maps to a different step on standard workflow 300 and each activity on the custom workflow maps to a different activity on standard workflow 300.

If cloud device 203 determines that not all steps and/or activities on the custom workflow map to unique steps and/or activities on standard workflow 300, cloud device 203 proceeds to step 407. In step 407, cloud device 203 generates and sends a communication to the initiating party. This communication references the next step advanced to in step 403. Since cloud device 203 has determined in step 405 that the initiating party does not use a custom workflow, the communication sent in step 407 would include information referencing the next step on standard workflow 300.

However, if cloud device 203 determines that all steps and/or activities on the custom workflow map to unique steps and/or activities on standard workflow 300, cloud device 203 proceeds to step 406. In step 406, cloud device 203 determines a step equivalent to the new step advanced to in step 403. For example, cloud device 203 may use map 313 to determine a step on the custom workflow that corresponds to the new step advanced to in step 403.

In step 408, cloud device 203 generates and sends a communication to the initiating party, referencing the equivalent step determined in step 406. In some embodiments, the communication also references the next step on standard workflow 300.

In step 409, regardless of the contents of the communication sent to the initiating party in steps 407 or 408, cloud device may send a communication to the notified party. The communication sent in step 409 includes, for example, information associated with the next step on standard workflow 300 (from step 403), an equivalent step associated with a custom workflow determined in step 406, information associated with the issue resolution request, the issue resolution request itself, or the like.

For example, if the initiating party sent a supplier quality issue resolution request (i.e., in step 401), the communication sent in step 409 may include the supplier quality issue resolution request, information indicating that the issue resolution has progressed to the pending acknowledgement state, a CAPA plan, a NCMR, or the like.

FIGS. 5A-5D illustrate example issue resolution requests in accordance with the disclosed embodiments. The requests illustrated on FIGS. 5A-5D are presented as example requests involving bi-directional communication between customer 201 A and third party 202A, using cloud device 203. Cloud device 203 keeps track of the status of the requests using a workflow such as workflow 300.

FIG. 5A illustrates an example supplier quality issue resolution request. In the course of business customer 201 A may determine that goods, supplies, or materials received from third party 202A are not in compliance with the specifications required by customer 201 A. For example, assume customer 201 A is producing a syringe and third party 202A is supplying customer 201 A with needles for the syringe. Customer 201 A may determine that the needle is not in compliance if the needle is too large, breaks under a small amount of stress, or is made of the incorrect material. Customer 201 A generates supplier investigation 503 for sending to third party 202A, comprising information about its determination that the needle is not in compliance with required specifications. Customer 201 A may send other information with the supplier investigation. As one example, customer 201 A may generate Non-Conforming Material Report (NCMR) 503B. NCMR 503B includes a report of the particular problems with the goods, supplies, or materials provided by third party 202A. As another example, customer 201 A may generate CAPA plan 503A for adoption by third party 202A. CAPA plan 503A indicates a proposed plan of action to be taken by third party 202A.

Customer 201 A sends supplier investigation 503 (along with CAPA 503A or NCMR 503B) to cloud system 203. Upon receipt, cloud system 203 advances a workflow to a state that acknowledges receipt of supplier investigation 503. Cloud system 203 sends notifications to customer 201 A and to third party 202A that workflow 300 has advanced to a new state. In some embodiments, the notifications may include an indication of the new state reached in workflow 300. In situations where customer 201 A and/or third party 202A use a custom workflow, the notifications can include an indication of an equivalent state on the custom workflow. Cloud system 203 generates investigation summary 504, comprising information associated with supplier investigation 503. Cloud system 203 then sends investigation summary 504 to third party 202A.

Third party 202A receives investigation summary 504 and performs internal quality processes. As one example, if investigation summary 504 indicates that the needles provided by third party 202A break too easily, third party 202A may re-tool its production line to utilize a stronger material in producing the needle, may examine its production line to determine whether impurities are present in the manufacturing process, or the like. Third party 202A then generates action summary 505 detailing steps taken to resolve the issue and sends it to cloud system 203.

As another example, third party 202A may determine that fixing the issue in investigation summary 504 would require materials of higher cost, would require third party 202A to temporarily cease production, would not be possible given the current requirements from customer 201 A, or the like. Third party 202A thus determines that customer 201 A would like to receive a CAPA plan detailing possible steps for resolving the issue. Third party 202A then generates action summary 505 and includes a CAPA plan detailing proposed steps for resolving the issue and sends it to cloud system 203.

Cloud system 203 receives action summary 505 from third party 202A and advances workflow 300 to indicate that third party 202A responded to an issue resolution request. Cloud system 203 may then forward action summary 505 to customer 201 A as supplier action item 506. Supplier action item 506 comprises information associated with action summary 505, such as a CAPA plan indicating proposed actions to be taken by third party 202A, actions that were taken by third party 202A, or the like. Once customer 201 A receives supplier action item 506, customer 201 A may then review the actions taken and/or proposed actions in a CAPA plan and may either approve or disapprove of supplier action item 506. Customer 201 A may then send a communication to third party 202A (e.g., through cloud system 203) approving or disapproving of plans in supplier action item 506.

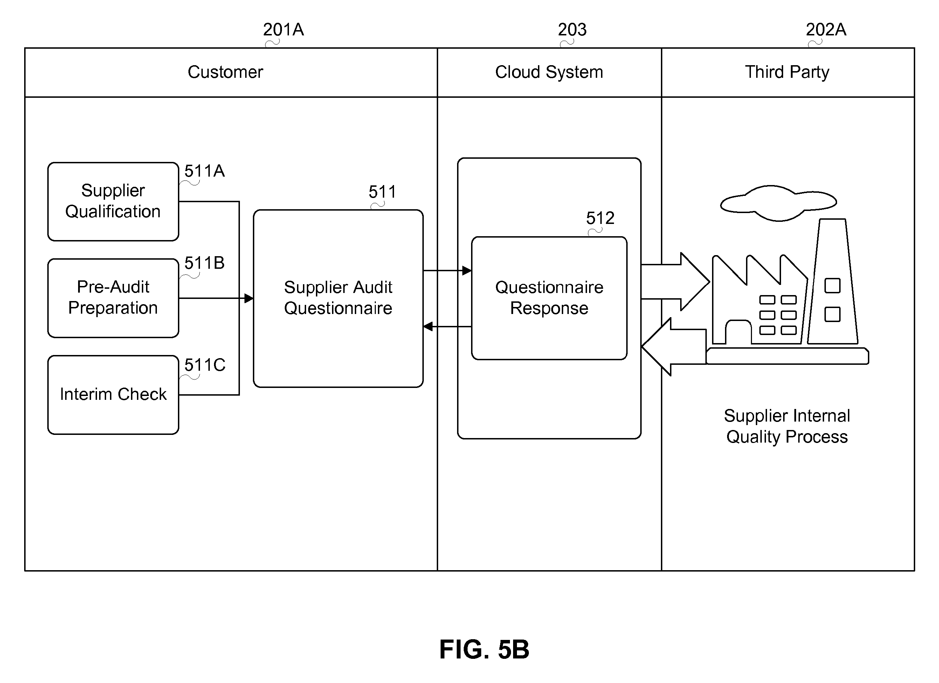

FIG. 5B illustrates an example supplier audit questionnaire request. Customer 201 A may use a supplier audit questionnaire to determine whether third party 202A would be a sufficient supplier for the needs of customer 201 A. For example, if third party 202A is not currently providing customer 201 A with goods or services, customer 201 A may want to determine whether third party 202A would be acceptable as a supplier. Supplier qualification 511 A indicates the qualities that customer 201 A desires in a supplier.

Customer 201 A may also generate pre-audit preparation 511 B. Pre-audit preparation 511 B can include documents or questionnaires to address general concerns regarding a business (e.g., whether the business has been investigated by a Federal agency or is known for having issues with quality) or a follow-up on a previous audit (e.g., to determine whether defects present in the previous audit are still present).

In some situations, customer 201 A may also generate interim check 511C. Interim check 511C includes questions from customer 201 A for third party 202A to determine whether third party 202A is complying with any requirements mandated by customer 201 A, federal laws, state laws, local laws, or the like. For example, interim check 511C may include questions to determine whether third party 202A is complying with Federal regulations (such as those concerning food and drugs in Title 21 of the Code of Federal Regulations), questions to determine what changes were implemented in response to a previous audit, questions to determine training and quality methodologies, questions to determine whether equipment changes led to a difference in quality of produced goods, or the like.

Customer 201 A may then generate supplier audit questionnaire 511, including at least one of supplier qualification 511 A, pre-audit preparation 511 B, or interim check 511C, and send supplier audit questionnaire to cloud system 202.

Cloud system 202 may store the information received in supplier audit questionnaire 511 in a database (for example, DBMS 208) and forward supplier audit questionnaire 511 to third party 202A. Third party 202A, upon receiving supplier audit questionnaire 511, evaluates supplier audit questionnaire 511.

For example, if supplier audit questionnaire 511 includes supplier qualification 511 A or pre-audit preparation 511 B, third party 202A determines whether it is able to comply with the requirements in supplier audit questionnaire 511. Third party 202A then assembles a response to supplier audit questionnaire 511 and sends it to cloud system 203 for forwarding to customer 201 A. If supplier audit questionnaire includes interim check 511C, third party 202A determines the information necessary to respond to interim check 511C. Third party 202A then assembles a response to supplier audit questionnaire 511 and sends it to cloud system 203 for forwarding to customer 201 A.

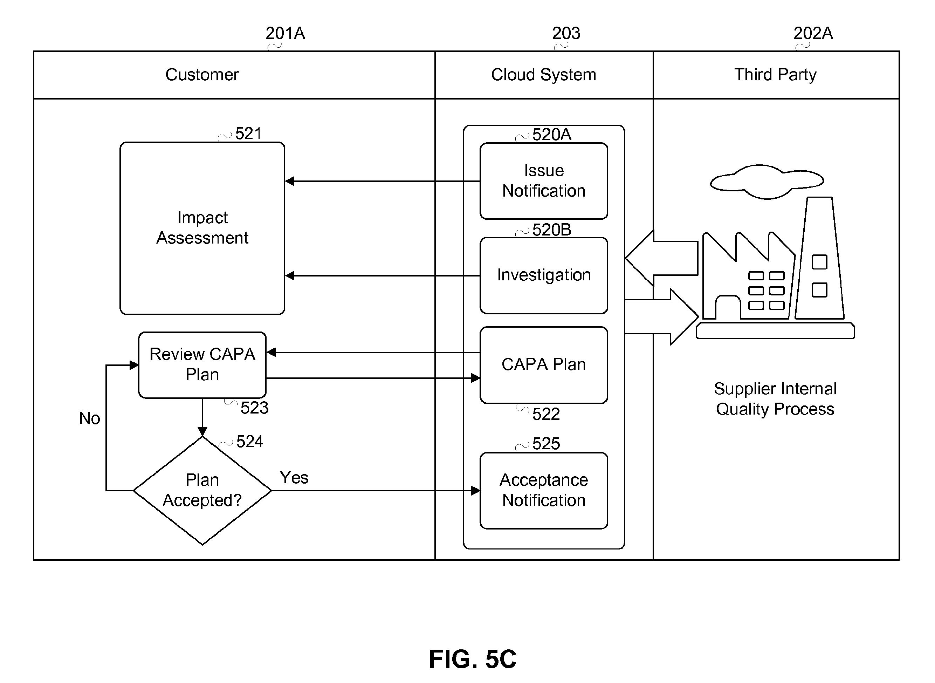

FIG. 5C illustrates an example quality issue notification from third party 202A to customer 201 A. Third party 202A may generate and send a quality issue notification if third party 202A determines that goods, materials, or supplies it has produced have a quality issue. For example, assume third party 202A determines that needles provided to customer 201 A break too easily. Third party 202A creates issue notification 520A including information on a quality issue determined by third party 202A. Issue notification 520A comprises, for example, the particular quality issue determined by third party 202A. Third party 202A also can create investigation 520B. Investigation 520B comprises, for example, photos, test data, documentation, recordings, or the like, concerning the quality issue. Third party 202A then sends issue notification 520A and/or investigation 520B to cloud system 203 for forwarding to customer 201 A. Cloud system 203 then sends the received issue notification 520A and/or investigation 520B to customer 201 A for review, and customer 201 A performs an impact assessment process 521. Impact assessment 521 is a process by which customer 201 A determines what impact the issue will have on its business or assembly of parts received from third party 202A.

After sending issue notification 520A and/or investigation 520B to customer 201 A through cloud system 203, third party 202A optionally generates CAPA plan 522. CAPA plan 522 indicates a proposed plan by third party 202A for fixing the quality issue spotted by third party 202A. Third party 202A sends CAPA plan to cloud system 203 for forwarding to customer 201 A.

Customer 201 A receives CAPA plan 522 in step 523. Customer 201 A then reviews CAPA plan 522 to determine whether it will fix the quality issue referenced by issue notification 520A and/or investigation 520B in step 524. If customer 201 A determines that CAPA plan 522 will fix the issue, customer 201 A sends acceptance notification 525 to cloud system 203. Cloud system 203 then sends a notification to third party 202A indicating that CAPA plan 522 was accepted.

If, however, customer 201 A determines that CAPA plan 522 is not acceptable in step 524, customer 201 A sends a replacement CAPA plan or modifications to CAPA plan 522 to cloud system 203 for forwarding to third party 202A.

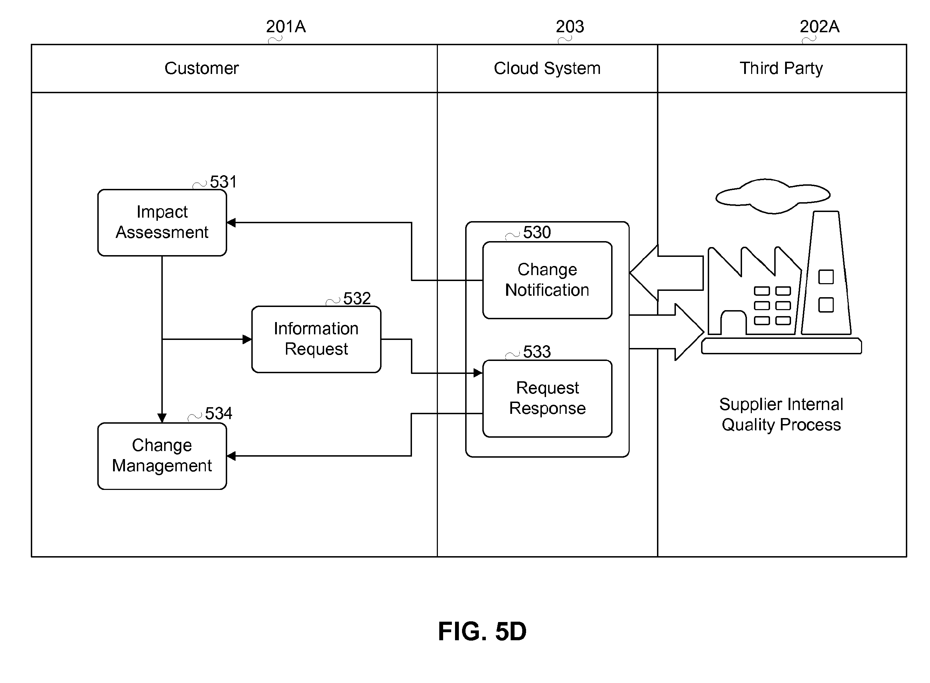

FIG. 5D illustrates an example supplier change notification from third party 202A to customer 201 A. Third party 202A may send a supplier change notification in a number of situations. For example, third party 202A can send a supplier change notification if third party 202A determines that a particular material will not be available for use in producing a good for customer 201 A and that a new material will be used for producing that good, that a factory associated with third party 202A is moving to a new location, that a manager or other individual associated with customer 201 A is leaving the company, or the like.

Third party 202A generates and sends a change notification 530. Change notification 530 comprises information concerning changes that third party 202A is going to make to the supplies or goods provided to customer 201 A. Third party 202A sends change notification 530 to cloud system 203 for forwarding to customer 201 A.

Customer 201 A receives change notification 530 from cloud system 203 and performs an impact assessment 531. Impact assessment process 531 is a process by which customer 201 A determines what impact the issue will have on its business or assembly of parts received from third party 202A. The steps taken by customer 201 A in performing impact assessment 531 depend on the particular changes indicated in change notification 530 that third party 202A will make. For example, if change notification 530 indicates that third party 202A will use a different material for manufacturing a needle for a syringe, customer 201 A may determine how this change will affect the syringe assembled by customer 201 A.

In response to performing impact assessment 531, customer 201 A can perform steps of change management 534. Change management 534 includes steps such as retooling of assembly lines, communication with other suppliers, recalculation of financial information, or the like. For example, if change notification 530 indicates that needles provided by third party 202A will begin producing needles that are larger than the needles it previously provided to customer 201 A, customer 201 A may communicate with another supplier (such as third party 202B in FIG. 2) to ask that the body where the needles attach be widened to accommodate the wider needles that will soon be provided by third party 201 A.

In some situations, customer 201A may not have received enough information from change notification 530 to adequately determine what the impact on its business will be. Customer 201 A may request further information about the change information in change notification 530. For example, customer 201 A may not have enough information to determine the full extent of impact on the operations of customer 201 A or whether customer 201 A will need to notify its other suppliers to request a change in the goods or material provided by those suppliers. Customer 201 A may thus generate and send an information request 532 to cloud system 203 for forwarding to third party 202A. Third party 202A may receive information request 532 and determine what further information customer 201 A needs to determine what the impact will be. Third party 202A then generates request response 533 and sends it to cloud system 203 for forwarding to customer 201 A. Customer 201 A can then perform change management 534 based on the information in change notification 530 or request response 533.

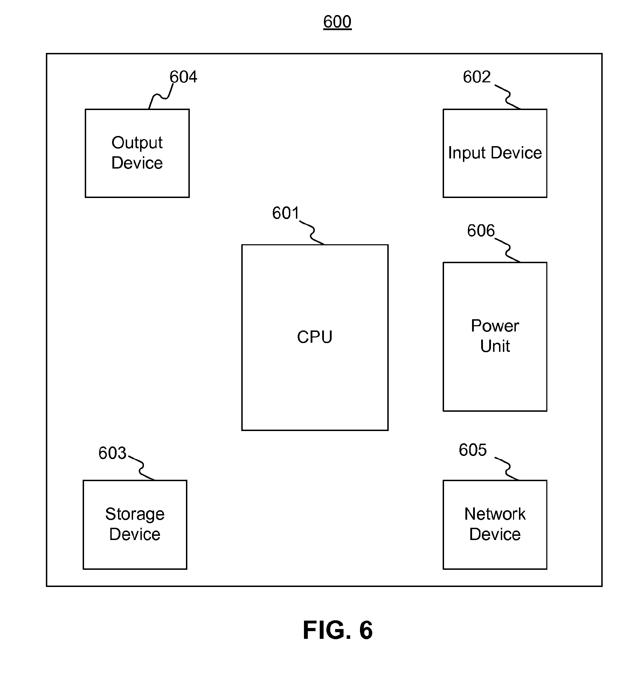

FIG. 6 is an exemplary computing device 600, consistent with disclosed embodiments. Variations of computing device 600 may be used for implementing any or all of customers 201A-201C, third parties 202A-202C, and cloud device 203. While the modules in FIG. 6 are represented in a singular form, in some embodiments, each of the devices in FIG. 6 may be omitted, duplicated, or substituted.

As shown in FIG. 6, exemplary computer device 600 may include central processing unit 601 for managing and processing data and operations consistent with the disclosed embodiments. CPU 601 may be configured to process data, execute software instructions stored in memory, and transmit data between the other components of device 600. For example, CPU 601 may be implemented as a mobile microprocessor, a desktop microprocessor, a server microprocessor, or any other type of electronic processor.

In some embodiments, computing device 600 also includes input device 602, which are configured to receive input from a user, other computers, other devices, or other modules. Input device 602 includes one or more of keyboards, mice, trackballs, trackpads, scanners, cameras, external storage or information devices, and other devices, which connect via Universal Serial Bus (USB), serial, parallel, infrared, wireless, wired, or other connections.

Computing device 600 may also include storage device 603. Storage device 603 includes one or more of optical memory, magnetic memory, signal memory, or any other type of memory configured to store information. Storage device 603 stores, for example, data, instructions, programs/applications, operating systems, or a combination thereof.

Computing device 600 also includes output device 604, configured to transmit data to users and/or modules or devices. Output device 604 includes one or more of computer monitors, televisions, screens, interface ports, projectors, printers, plotters, and other recording/displaying devices which connect via wired or wireless connections.

Computing device 600 may also include network device 605. Network device 605 is configured to allow computer device 600 to connect to and exchange information with one or more networks, such as the Internet, a local area network, a wide area network, a cellular network, a wireless network, or any other type of network. Network device 605 may be implemented as a wired network adapter, a wireless network adapter, an infrared network adapter, a cellular or satellite network adapter, or any other type of network adapter.

Computing device 600 may also include power unit 606, configured to enable computer device 600 and its components to receive power and operate. Power unit 606 may be implemented as a battery, power supply, or the like.

Various embodiments have been described with reference to the accompanying drawings and embodiments. It will, however, be evident that various modifications and changes may be made thereto, and additional embodiments may be implemented, without departing from the present disclosure. The specification and drawings are accordingly to be regarded in an illustrative rather than restrictive sense.

For example, advantageous results may still be achieved if steps of the disclosed methods were performed in a different order and/or if components in the disclosed systems were combined in a different manner and/or replaced or supplemented by other components. Advantageous results may still be achieved if values or data were different than explicitly disclosed. Other implementations are also within the scope of the present disclosure.

It is to be understood that both the foregoing general description and the following detailed description are exemplary and explanatory only and are not restrictive of the disclosed embodiments, as claimed. Note also that, as used herein, the indefinite articles "a" and "an" mean "one or more" in open-ended claims containing the transitional words "comprising," "including," and/or "having."

The accompanying drawings, which are incorporated in and constitute a part of this specification, illustrate one or more embodiments and together with the description, serve to explain certain aspects of the disclosed embodiments.

Other embodiments will be apparent to those skilled in the art from consideration of the specification and practice disclosed herein. It is intended that the specification and examples be considered as exemplary only, with a true scope being indicated by the following claims.

## Claims

1. A computer-implemented method comprising:
receiving, over an electronic network, a first communication from a first party associated with a process, the process associated with the first party and a second party;
in response to receiving the first communication, advancing a standard workflow to a step associated with the standard workflow;
determining whether the first party uses a custom workflow, and if so, determining an equivalent step associated with the custom workflow based on the step associated with the standard workflow;
sending a second communication to the first party comprising information associated with the advancing and at least one of the step or the determined equivalent step.

2. The method of claim 1, further comprising sending a third communication to the second party, the third communication comprising information associated with the first communication and the step associated with the standard workflow.

3. The method of claim 2, further comprising:
receiving a fourth communication from the second entity;
in response to receiving the fourth communication, advancing the standard workflow to a second step associated with the standard workflow;
if the first party uses the custom workflow, determining a second equivalent step associated with the custom workflow based on the second step associated with the standard workflow; and
sending a fifth communication to the first party comprising information associated with the fourth communication and at least one of the second step or the second equivalent step.

4. The method of any of the preceding claims, wherein at least one of the communications include at least one of a document, an image, a recording, or data associated with at least one step of the process.

5. The method of claim 3 or claim 4, wherein:
the first communication includes information on one of a quality issue or an audit questionnaire; and
the fourth communication comprises at least one of a corrective action plan or a response to the audit questionnaire.

6. The method of claim 3 or claim 4, wherein the first communication is a request for an update, and the fourth communication includes information associated with the request for an update.

7. The method of any of the preceding claims, wherein the second party is a supplier to the first party, and the process associated with the supplier and the first party is a manufacturing process.

8. The method of any of the preceding claims, wherein determining whether the first party uses the custom workflow further comprises:
determining a set of states and activities associated with the custom workflow;
determining whether the states and activities associated with the custom workflow correspond to states and activities associated with the standard workflow; and
if the states and activities associated with the custom workflow correspond to states and activities associated with the standard workflow, determining that the first party uses the custom workflow.

9. The method of claim 8, wherein if the states and activities associated with the custom workflow do not correspond to states and activities associated with the standard workflow, determining that the first party uses the standard workflow.

10. A computer system comprising:
at least one electronic processor; and
a memory storing instructions that, when executed by the at least one electronic processor, cause the at least one electronic processor to perform a method in accordance with any of the preceding claims.

11. A computer-readable storage medium comprising instructions, the instructions configured to cause at least one electronic processor perform a method in accordance with any of claims 1 to 9.
